(19) Europäisches Patentamt
European Patent Office
Office européen des brevets

(11) **EP 2 445 990 B1**

(12) **EUROPÄISCHE PATENTSCHRIFT**

(45) Veröffentlichungstag und Bekanntmachung des Hinweises auf die Patenterteilung:
**04.03.2026 Patentblatt 2026/10**

(21) Anmeldenummer: **10740139.0**

(22) Anmeldetag: **22.06.2010**

(51) Internationale Patentklassifikation (IPC):
**C10G 1/02** *(2006.01)*     **C10B 53/02** *(2006.01)*
**C10L 1/02** *(2006.01)*     **C10G 1/06** *(2006.01)*
**C10G 1/04** *(2006.01)*     **C10G 3/00** *(2006.01)*
**B01J 29/70** *(2006.01)*

(52) Gemeinsame Patentklassifikation (CPC):
**C10G 3/40; C10G 1/02; C10G 3/60;** B01J 29/7003;
C10G 2300/1014; C10G 2300/1018

(86) Internationale Anmeldenummer:
**PCT/DE2010/000706**

(87) Internationale Veröffentlichungsnummer:
**WO 2010/149138 (29.12.2010 Gazette 2010/52)**

(54) **THERMOCHEMISCHE UMWANDLUNG VON BIOMASSE**

THERMOCHEMICAL CONVERSION OF BIOMASS

TRANSFORMATION THERMOCHIMIQUE DE BIOMASSE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **26.06.2009 DE 102009030809**

(43) Veröffentlichungstag der Anmeldung:
**02.05.2012 Patentblatt 2012/18**

(73) Patentinhaber: **Nexxoil GmbH**
**13507 Berlin (DE)**

(72) Erfinder: **WILLNER, Thomas**
**21077 Hamburg (DE)**

(74) Vertreter: **Gulde & Partner**
**Patent- und Rechtsanwaltskanzlei mbB**
**Berliner Freiheit 2**
**10785 Berlin (DE)**

(56) Entgegenhaltungen:
**JP-A- 2006 063 310     US-A1- 2008 072 478**

- **FRANK BEHRENDT: "Direktverfluessigung von Biomasse - Reaktionsmechanismen und Produktverteilungen ionsmechanismen und Produktverteilungen", INTERNET CITATION, 8 June 2006 (2006-06-08), XP007902530, Retrieved from the Internet <URL:http://www. naturdaemmstoffe.info/pdf/literatur/ pdf_253studie_zur_dire ktverfluessigung_final_komprimiert.pdf> [retrieved on 20070618]**
- **LIU Z ET AL: "Effects of various solvents on the liquefaction of biomass to produce fuels and chemical feedstocks", ENERGY CONVERSION AND MANAGEMENT, ELSEVIER SCIENCE PUBLISHERS, OXFORD, GB, vol. 49, no. 12, 1 December 2008 (2008-12-01), pages 3498 - 3504, XP025571323, ISSN: 0196-8904, [retrieved on 20080919], DOI: 10.1016/ J.ENCONMAN.2008.08.009**
- **DEMIRBAS A: "Effect of lignin content on aqueous liquefaction products of biomass", ENERGY CONVERSION AND MANAGEMENT, ELSEVIER SCIENCE PUBLISHERS, OXFORD, GB, vol. 41, no. 15, 1 October 2000 (2000-10-01), pages 1601 - 1607, XP004196782, ISSN: 0196-8904, DOI: 10.1016/S0196-8904(00)00013-3**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Verarbeitung von Biomasse und biogenen Reststoffen zu Rohölen.

Der Begriff Biomasse bezeichnet die Gesamtheit der Masse an organischen Materialien einschließlich deren, die in biogenen Reststoffen und Klärschlämmen enthalten sind.

Pflanzliche Biomasse besteht im Wesentlichen aus den drei Biopolymeren Cellulose, Hemicellulosen (auch als Polyosen bezeichnet) und Lignin. Ihr Anteil macht bei Hölzern der gemäßigten Zonen in der Regel 97-99 % der Holzsubstanz aus. Davon entfallen 30-35 % auf Cellulose, 15-35 % auf Hemicellulosen und 20-35 % auf Lignin. Wesentlich geringere Anteile weisen Extraktstoffe mit 1-3 % sowie anorganische Bestandteile (Asche) 0,1-0,5 % auf. Im Allgemeinen ist der Ligninanteil in Nadelhölzern höher als in Laubhölzern, in Laubhölzern ist der Hemicellulosen-Anteil etwas höher.

Die Umwandlung von Biomasse in sauerstoffhaltige Rohöle als flüssige Zwischenprodukte erfolgt am einfachsten über die so genannte Direktverflüssigung. Direktverflüssigung bedeutet eine einstufige Niedertemperaturumwandlung im Bereich zwischen 250 und 550 °C. Dabei entstehen grundsätzlich folgende Produkte:

- eine flüssige Kondensatphase, die das Rohöl als Zielprodukt sowie das Reaktionswasser enthält,
- eine brennbare Gasphase als Nebenprodukt und
- ein fester Rückstand als Nebenprodukt.

In günstigen Fällen bildet sich hydrophobes Rohöl, was bedeutet, dass das Rohöl nicht mischbar mit Wasser ist, d. h. in Kontakt mit Wasser bilden sich mindestens zwei unmischbare Flüssigphasen, eine Ölphase und eine Wasserphase. Die Qualität des Rohöles wird durch den so genannten Heizwert bestimmt. Der Heizwert ist die bei der Verbrennung maximal nutzbare Wärmemenge, bei der es nicht zu einer Kondensation des im Abgas enthaltenen Wasserdampfes kommt, bezogen auf die Menge des eingesetzten Brennstoffs. Ein hoher Anteil an Sauerstoff im Brennstoff wirkt sich dabei negativ auf den Heizwert ($H_j$) aus, wie aus folgender Formel zu erkennen ist:

$$Hi = (34{,}0 \cdot m(C) + 101{,}6 \cdot m(H) + 6{,}3 \cdot m(N) + 19{,}1 \cdot m(S)$$
$$- 9{,}8 \cdot m(O) - 2{,}5 \cdot m(H2O)) \; MJ/kg$$

Dabei sind m(C), m(H), m(N), m(S), m(O) und m(H20) die durch 100 dividierten prozentualen Massenanteile von Kohlenstoff, Wasserstoff, Stickstoff, Schwefel, Sauerstoff und Wasser.

Eine sehr umfassende Beschreibung aller existierenden Verfahren zur Direktverflüssigung findet sich in der Studie Direktverflüssigung von Biomasse - Reaktionsmechanismen und Produktverteilungen - 114-50-10-0337/05-B von Prof. Dr. Frank Behrendt.

Das historische Pittsburg Energy Resarch Center (PERC)-Verfahren arbeitet unter sehr hohem Druck von rund 200 bar mit wässrigem Medium, gelöstem Katalysator, Kreislauföl und Kohlenmonoxid-Wasserstoffgasgemisch. Das ebenso historische Lawrence Berkeley Laboratory (LBL)-Verfahren wird ohne Kreislauföl, aber ansonsten unter den gleichen aufwendigen Bedingungen wie das PERC- Verfahren durchgeführt. Beide Verfahren wurden wegen der enormen Komplexität aus technischen und ökonomischen Gründen nicht weiter verfolgt.

Mit dem hydrolytischen HTU- Verfahren (Hydrothermal Upgrading) der Fa. SHELL können viele verschiedene Biomassen (auch mit hohem Feuchtegehalt) unter sehr hohem Druck von etwa 180 bar verflüssigt werden. Es entsteht ein teerartiges sauerstoffhaltiges Produkt, welches weiterer Aufbereitung zu einem flüssigen Öl bedarf. Unter hohem Wasserstoffdruck und unter Einsatz teurer Edelmetall-Katalysatoren läuft die Direkte Katalytische Druckverflüssigung nach dem BFH-Verfahren.

Das Druckhydrierungs-Verfahren / DoS (Direktverflüssigung organischer Substanzen) nach Willner wird ebenfalls unter Wasserstoffdruck, aber ohne Katalysatoren durchgeführt.

Alle bisher genannten Direktverflüssigungsverfahren einschließlich der historischen arbeiten unter Druck und sind somit sehr aufwendig. Dabei stellt insbesondere der Eintrag fester Biomasse in den Druckreaktor im Hinblick auf Konsistenz der in den Reaktor gelangenden Biomasse sowie im Hinblick auf Durchführbarkeit, Zuverlässigkeit und Wirtschaftlichkeit des Prozesses stets ein Problem dar. Außerdem sind Druckanlagen insgesamt teurer und im Betrieb anfälliger als Atmosphärendruck-Anlagen.

Daneben gibt es folgende Direktverflüssigungsverfahren, die unter Atmosphärendruck arbeiten:
Das KDV- Verfahren (Katalytische Drucklose Verölung) der Firma Alphakat sowie die Variante nach Willner werden in einer sauerstofffreien erdölstämmigen Schwerölphase als Reaktionsmedium unter Atmosphärendruck durchgeführt und benötigen pulverisierte Feststoff-Katalysatoren. Letzteres ist ein wirtschaftliches Problem, da die Katalysatoren teuer sind und im Reaktor ihre Aktivität sehr schnell durch Verkokung verlieren. Außerdem muss dem KDV-Verfahren ständig neues Schweröl zugeführt werden, da sich beim Einsatz von Biomasse die Reaktorsumpfölphase nicht selbsttätig regeneriert.

Weiterhin arbeitet das KDV-Verfahren mit einem internen Schwerölkreislauf, der über eine Kreislaufpumpe aufrechterhalten wird. Ein grundsätzliches Problem dabei ist, dass das Kreislauföl Reaktionstemperatur hat und die Pumpen dadurch hohen thermischen und korrosiven Belastungen ausgesetzt sind und zu häufigen Ausfällen neigen. Beim KDV-Verfahren kommt noch erschwerend die Feststoffbelastung insbesondere aufgrund der Katalysatorfracht aber auch der biogenen Mineralstofffracht im Kreislauföl hinzu, wodurch die Pumpen zusätzlich hohen Abrasionsbelastungen ausgesetzt sind, was zu hohem Verschleiß führt und besonders teure Werkstoffe erfordert. Beim KDV-Verfahren bildet sich bei Biomasseeinsatz sowohl mit als auch ohne Katalysator keine stabile und sich selbsttätig regenerierende Sumpfphase aus, so dass beständig neues externes Schweröl zugeführt werden muss.

Außerdem erhält man beim KDV-Verfahren sehr viel festen Rückstand und vergleichsweise wenig Rohöl als Zielprodukt. Zudem lassen sich beim KDV-Verfahren bis zu vier unmischbare Flüssigphasen im Kondensat beobachten, was eine technisch sinnvolle Nutzung sehr erschwert.

Die Flashpyrolyse ist im Wesentlichen eine sehr schnelle Aufheizung auf Reaktionstemperatur unter Atmosphärendruck. Hierbei entsteht eine hohe Ausbeute an Rohöl, welches allerdings hydrophil ist. D. h. es ist mit Wasser mischbar bis zu einem Wassergehalt von etwa 35 %. Daher ist das Rohöl minderwertig wegen seines extrem niedrigen Heizwertes in der Größenordnung von nur 15 bis 17 MJ/kg und wegen seiner starken Korrosivität insbesondere aufgrund hohen Säuregehaltes und dadurch schwierig technisch zu nutzen oder weiterzuverarbeiten.

Das NTK- Verfahren (Niedertemperaturkonvertierung) von Prof. Bayer (Uni Tübingen) ist ein einfaches Pyrolyseverfahren unter Atmosphärendruck ohne schnelle Aufheizung. Dieses Verfahren ist allerdings nicht für die Verflüssigung pflanzlicher Biomasse geeignet, sondern wird überwiegend zur Klärschlammverflüssigung eingesetzt. Ein grundsätzliches Problem des NTK- Verfahrens ist, dass es nur vergleichsweise geringe Rohölausbeuten, aber hohe Ausbeuten an festem Rückstand erzeugt.

Die JP 2006/063310 A beschreibt ein thermochemisches Verfahren, in dem ein organisches Petroleum-Lösungsmittel verwendet wird. Hierbei entstehen eine Reihe unterschiedlicher Phasen bzw. Fraktionen. Ein Teil des gebildeten Kondensats wird als Lösungsmittel zur Biomasse rückgeführt. Über- oder Unterdruck wird angelegt und es werden Katalysatoren verwendet.

Die Aufgabe der Erfindung ist es, ein Verfahren bereitzustellen, das jede Art von Biomasse, pflanzliche und tierische, sowie biogene Reststoffe einschließlich Klärschlamm unter Atmosphärendruck, ohne Zusatz von Katalysatoren und ohne Zusatz von Schwerölen in Rohöle mit nur geringen festen organischen Rückständen umwandeln kann. Insbesondere soll es ermöglicht sein, hydrophobe Rohöle herzustellen, wobei auf einen internen Schwerölkreislauf verzichtet werden soll. Spezielles Ziel ist es, hydrophobe Rohöle mit einem Heizwert von mehr als 25 MJ/kg zu erhalten.

Die Aufgabe wird gelöst durch das Verfahren mit den in Anspruch 1 genannten Merkmalen. Die Unteransprüche geben vorteilhafte Ausgestaltungen der Erfindung wieder. Das erfindungsgemäße Direktverflüssigungsverfahren ist ein einstufiges Verfahren, die Umwandlungsreaktionen werden unter Atmosphärendruck in einer flüssigen Schwerölsumpfphase durchgeführt.

Ein weiteres Merkmal des erfindungsgemäßen Verfahrens liegt darin, das sich eine stabile und sich selbst regenerierende Sumpfphase ausbildet, so dass kein neues externes Schweröl zugeführt werden muss.

Ein wesentliches Merkmal des erfindungsgemäßen Verfahrens dass die Schwerölsumpfphase im Reaktor mindestens 5 Gew..-% organisch gebundenen Sauerstoff enthalten muss.

Als Schweröl, aus dem sich in Verbindung mit der zugeführten Biomasse die Sumpfphase bildet, können zum Beispiel Holzteere oder Holzteere mit Tallölanteilen verwendet werden. Solche Holzteere können sowohl Nadel- als auch Laubholzteere sein.

Die zerkleinerte getrocknete feste Biomasse wird bei dem erfindungsgemäßen Verfahren direkt in die Sumpfphase gefördert.

Der Begriff Biomasse bezeichnet dabei die Gesamtheit der Masse an organischen Materialien einschließlich deren, die in biogenen Reststoffen und Klärschlämmen enthalten sind.

Überraschenderweise erreicht man unter diesen Randbedingungen das Ziel der Erzeugung hydrophoben Rohöles unter Minimierung festen Rückstandes ohne die Zugabe von Katalysatoren und Schweröl, ohne eine besondere Konditionierung der getrockneten Biomasse (zum Beispiel Vorwärmung oder Anmaischung mit Schweröl) sowie ohne einen internen Schwerölkreislauf.

Beim erfindungsgemäßen Verfahren bildet sich überraschenderweise ganz anders als bei nicht erfindungsgemäßen Verfahren, die über eine sauerstofffreie Schwerölphase verfügen (zum Beispiel KDV Verfahren) eine stabile und sich selbst regenerierende Sumpfphase aus, so dass kein neues externes Schweröl zugeführt werden muss. Auch das Kondensat bietet ein völlig andersartiges Bild als bei nicht erfindungsgemäßen Verfahren, die über eine sauerstofffreie Schwerölphase verfugen (zum Beispiel KDV Verfahren). In der Regel besteht das Kondensat nur noch aus zwei unmischbaren Flüssigphasen, der Rohölphase als Zielprodukt und einer wässrigen Phase. In seltenen Fällen erhält man drei Flüssigphasen, wenn die Rohölphase Komponenten enthält, die teilweise leichter und teilweise schwerer als Wasser sind. In diesem Falle teilt sich die Rohölphase in eine obere und eine untere Flüssigphase auf, während die Wasserphase in der Mitte zu finden ist. Ein wirtschaftlich entscheidender Unterschied gegenüber nicht erfindungsgemäßen Verfahren, die über eine sauerstofffreie Schwerölphase verfügen (zum Beispiel KDV Verfahren) ist, dass man nach dem erfindungsgemäßen Verfahren wesentlich mehr Rohölprodukt und weniger festen Rückstand erhält.

Die Heizwerte des nach dem erfindungsgemäßen Verfahren produzierten Rohöls liegen mit größer/gleich 25 MJ/kg teilweise oberhalb derer, die mit nicht erfindungsgemäßen Verfahren, die über eine sauerstofffreie Schwerölphase verfugen (zum Beispiel KDV Verfahren) erzielt werden. Dieses stellt ein überraschendes Ergebnis dar, da der Sauerstoffgehalt der Sumpfphase sich negativ auf den Heizwert des Produktöles auswirken sollte.

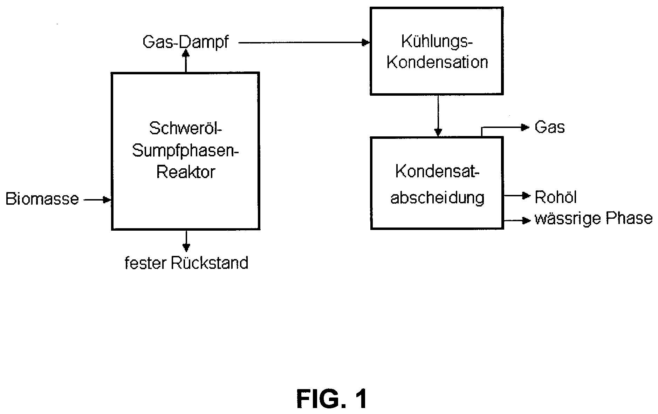

Fig. 1 zeigt einen typischen Ablauf des erfindungsgemäßen kontinuierlich betriebenen Verfahrens im Flussdiagramm. Kernstück ist der beheizte Reaktor, der die Schwerölsumpfphase auf Reaktionstemperatur hält. Die zerkleinerte getrocknete Biomasse wird über ein Förderorgan (zum Beispiel Förderschnecke) direkt in die Sumpfphase gebracht, wo sie sich im Kontakt mit dem Schweröl schnell aufheizt. Die flüchtigen Reaktionsprodukte verlassen den Reaktor oben über die Gas-/Dampfphase und werden gekühlt sowie anteilig kondensiert. Das Kondensat wird aufgefangen und das nicht kondensierende Reaktionsgas wird der weiteren Verwendung (zum Beispiel Verbrennung zur Energieversorgung des Prozesses) zugeführt. Im Kondensat trennen sich mindestens zwei unmischbare Flüssigphasen, also mindestens eine hydrophobe Rohölphase als Zielprodukt und eine wässrige Phase. Der feste Rückstand wird zum Beispiel nach Sedimentation unten aus dem Reaktor entfernt. Zur Abtrennung des festen Rückstandes können auch andere Prozessschritte wie zum Beispiel Filtration, Pressfiltration, Zentrifugalabscheidung, Vakuumverdampfung und-/oder Extraktion mit Lösungsmitteln eingesetzt werden.

Im Folgenden sind ein erfindungsgemäßes Beispiel (siehe Beispiel 3) sowie zwei nicht erfindungsgemäße Verfahrensbeispiele gegeben. Es zeigen sich bei den nicht erfindungsgemäßen KDV-Bedingungen, bei denen eine sauerstofffreie Schwerölphase vorliegt, deutlich andere Produktzusammensetzungen als bei dem erfindungsgemäßen Beispiel 3.

Die entscheidende Randbedingung ist hierbei, dass die Schwerölsumpfphase im Reaktor mindestens 5 Gew.-% organisch gebundenen Sauerstoff enthalten muss. Vergleicht man dies mit dem am nächsten liegenden Stand der Technik, dem KDV- Verfahren, bei dem sauerstofffreie erdölstämmige Schweröle als Reaktionsphase eingesetzt werden, so kommt es trotz der vergleichsweise geringfügigen Veränderung in der Zusammensetzung der Sumpfphase unerwartet zu vollkommen andersartigen Ergebnissen:

Als Ausführungsbeispiel wird die experimentelle Umwandlung von zerkleinertem und getrocknetem Getreidestroh an einem 8-Liter Laborreaktor beschrieben. Der Laborreaktor ist außen elektrisch beheizt und enthält im Inneren ein Rührwerk, das die Schwerölsumpfphase in Wandnähe in Bewegung hält, damit dort ein guter Wärmeübergang gewährleistet ist. Die feste Biomasse wird über eine Förderschnecke direkt in die auf Reaktionstemperatur gehaltene Sumpfphase gefahren. Die flüchtigen Reaktionsprodukte verlassen den Reaktor oben und werden dem Kühlungskondensator zugeführt. Das Kondensat wird aufgefangen und die verbleibende Gasphase wird der Abgasreinigung zugeführt. Nach mehrstündigem Betrieb mit kontinuierlicher Biomassezufuhr wird der Versuch beendet und alle Produkte einschließlich der Sumpfphase bilanziert, wobei der Gehalt an festem Rückstand in der Sumpfphase analytisch bestimmt wird. Das Reaktionsgasprodukt wird als Bilanzdifferenz bestimmt. Alle hier beschriebenen Versuche werden mit kontinuierlicher Strohzufuhr von 1 kg/h bei 350 <0>C unter Atmosphärendruck durchgeführt. Der Heizwert des Strohs beträgt 15,9 MJ/kg.

**Beispiel 1: KDV-Bedingungen mit Katalysator**

Katalysator: 30 % Tricat Zeolith A4 suspendiert in der Sumpfphase Sumpfphasenschweröl: BP Energol CS 220 (Heizwert 43,0 MJ/kg, Sauerstoffgehalt 0%)

Ergebnis:

4 Kondensatphasen (von oben: Phase 1 = nicht biogene Kohlenwasserstoffphase, Phase 2 = leichte biogene Rohölphase, Phase 3 = wässrige Phase, Phase 4 = schwere biogene Rohölphase)
Massenbilanz in Gew.%, bezogen auf organische Trockenmasse des eingesetzten Strohs: 4 % Rohöl, 36 % Wasserphase, 33 % fester Rückstand, 27 % Gas (Diff.)
Heizwert des Rohöles: 26,4 MJ/kg

**Beispiel 2: KDV-Bedingungen ohne Katalysator**

Sumpfphasenschweröl: BP Energol CS 220 (Heizwert 43,0 MJ/kg, Sauerstoffgehalt 0%)

Ergebnis:

4 Kondensatphasen (von oben: Phase 1 = nicht biogene Kohlenwasserstoffphase, Phase 2 = leichte biogene Rohölphase, Phase 3 = wässrige Phase, Phase 4 = schwere biogene Rohölphase)
Massenbilanz in Gew.%, bezogen auf organische Trockenmasse des eingesetzten Strohs: 12 % Rohöl, 33 % Wasserphase, 34 % fester Rückstand, 21 % Gas (Diff.)
Heizwert des Rohöles: 25,9 MJ/kg

**Beispiel 3**: **Erfindungsgemäße Bedingungen (d. h. ohne Katalysator)**

Sumpfphasenschweröl: Commentz Nadelholzteer mit Tallölanteilen (Heizwert 38,1 MJ/kg, Sauerstoffgehalt 9 %)

Ergebnis:

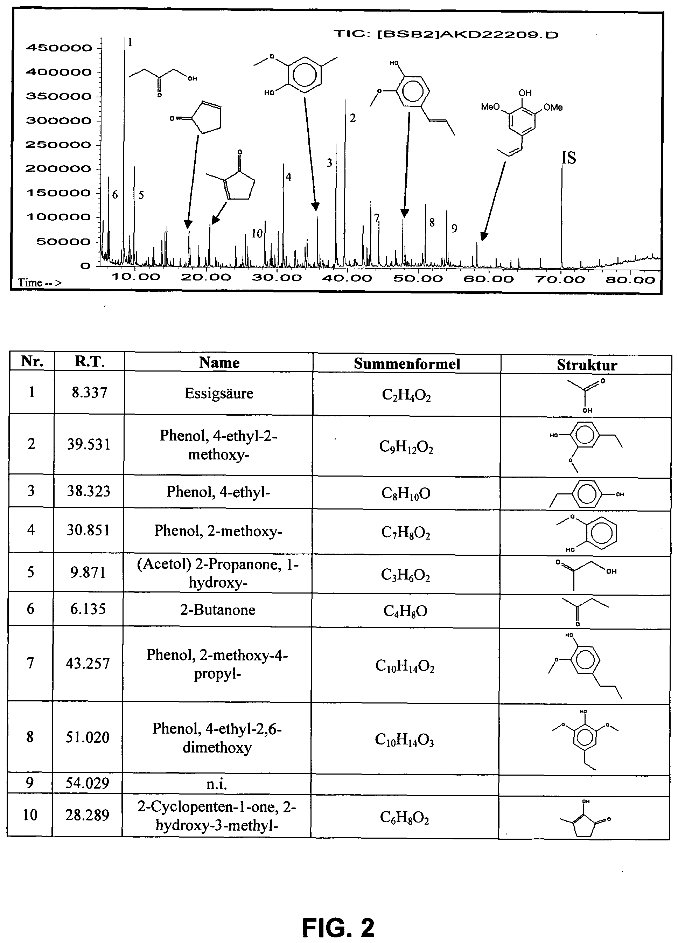

2 Kondensatphasen (von oben: Phase 1 = biogene Rohölphase, Phase 2 = wässrige Phase) Massenbilanz in Gew.%, bezogen auf organische Trockenmasse des eingesetzten Strohs: 38 % Rohöl, 29 % Wasserphase, 12 % fester Rückstand, 21 % Gas (Diff.)
Heizwert des Rohöles: 28,1 MJ/kg
Fig. 2 zeigt eine GC-MS-Analyse des Rohöles.

## Patentansprüche

1. Verfahren zur Herstellung von Rohöl aus Biomasse durch Direktverflüssigung unter Atmosphärendruck, mit den Schritten:

   a) Direktes Zuführen von zerkleinerter getrockneter Biomasse in einen Schweröl enthaltenden Reaktor zum Ausbilden einer aus Biomasse und Schweröl bestehenden Schwerölsumpfphase;
   b) Temperieren der Schwerölsumpfphase auf eine vorbestimmte Reaktionstemperatur;
   c) Kondensieren und Auffangen der flüchtigen Reaktionsprodukte; und
   d) Abscheiden und Auffangen des hydrophoben Rohöls aus den kondensierten flüchtigen Reaktionsprodukten,

   **dadurch gekennzeichnet, dass** sich eine stabile und sich selbstregenerierende Schwerölsumpfphase ausbildet, so dass kein neues externes Schweröl zugeführt werden muss, das Verfahren unter Atmosphärendruck und ohne Zusatz von Katalysatoren durchgeführt wird, und die Schwerölsumpfphase wenigstens 5 Gew.-% organisch gebundenen Sauerstoff aufweist.

2. Verfahren nach Anspruch 1, **dadurch gekennzeichnet, dass** die Biomasse dem Reaktor kontinuierlich zugeführt wird.

3. Verfahren nach einem der vorhergehenden Ansprüche, **dadurch gekennzeichnet, dass** die Reaktionstemperatur im Bereich von 250 bis 550°C liegt.

4. Verfahren nach einem der vorhergehenden Ansprüche, **dadurch gekennzeichnet, dass** der Reaktor vor Zuführen der Biomasse auf die Reaktionstemperatur vortemperiert wird.

5. Verfahren nach einem der vorhergehenden Ansprüche, **dadurch gekennzeichnet, dass** das Schweröl Holzteer ist.

6. Verfahren nach einem der Ansprüche 1 bis 4, **dadurch gekennzeichnet, dass** das Schweröl Holzteer mit Tallölanteilen ist.

7. Verfahren nach einem der vorhergehenden Ansprüche 1 bis 4, **dadurch gekennzeichnet, dass** das Schweröl Nadelholzteer ist.

8. Verfahren nach einem der vorhergehenden Ansprüche 1 bis 4, **dadurch gekennzeichnet, dass** das Schweröl Nadelholzteer mit Tallölanteilen ist.

9. Verfahren nach einem der vorhergehenden Ansprüche 1 bis 4, **dadurch gekennzeichnet, dass** das Schweröl Laubholzteer ist.

10. Verfahren nach einem der vorhergehenden Ansprüche 1 bis 4, **dadurch gekennzeichnet, dass** das Schweröl Laubholzteer mit Tallölanteilen ist.

**Claims**

1. Method for producing crude oil from biomass by direct liquefaction under atmospheric pressure, involving the following steps:

   a) introducing dried crushed biomass into a reactor containing heavy oil to form a sump oil phase consisting of biomass and heavy oil;
   b) maintaining the temperature of the sump oil phase at a predetermined reaction temperature;
   c) condensing and collecting the volatile reaction products; and
   d) isolating and collecting the hydrophobic crude oil from the condensed volatile reaction products,

   **characterized in that**

   a stable and self-regenerating heavy oil sump phase is formed so that no new external heavy oil needs to be supplied,
   the method is carried out under atmospheric pressure and without catalysts, and the heavy oil sump phase has at least 5 wt.-% organically bound oxygen.

2. Method according to claim 1, **characterized in that** the biomass is continuously introduced into the reactor.

3. Method according to any one of the preceding claims, **characterized in that** the reaction temperature is in the range from 250 to 550°C.

4. Method according to any one of the preceding claims, **characterized in that** before introducing the biomass, the reactor is preheated to the reaction temperature.

5. Method according to any one of the preceding claims, **characterized in that** the heavy oil is wood tar.

6. Method according to any one of claims 1 to 4, **characterized in that** the heavy oil is wood tar with portions of tall oil.

7. Method according to any one of the preceding claims 1 to 4, **characterized in that** the heavy oil is softwood tar.

8. Method according to any one of the preceding claims 1 to 4, **characterized in that** the heavy oil is softwood tar with portions of tall oil.

9. Method according to any one of the preceding claims 1 to 4, **characterized in that** the heavy oil is hardwood tar.

10. Method according to any one of the preceding claims 1 to 4, wherein the heavy oil is hardwood tar with portions of tall oil.

**Revendications**

1. Procédé de production de pétrole brut à partir de biomasse par liquéfaction directe sous pression atmosphérique, comprenant les étapes suivantes :

   a) introduction de biomasse broyée séchée dans un réacteur contenant du fioul lourd afin de former une phase de puisard composée de biomasse et de fioul lourd ;
   b) maintien de la température de la phase de puisard à une température de réaction prédéterminée ;
   c) condensation et collecte des produits de réaction volatils ; et
   d) isolement et collecte du pétrole brut hydrophobe à partir des produits de réaction volatils condensés,

   **caractérisé en ce qu'**une phase de puisard stable et auto-régénératrice est formée de sorte qu'aucun nouveau fioul lourd externe ne doit être fourni,
   le procédé est mis en œuvre sous pression atmosphérique et sans catalyseurs,

et la phase de puisard contient au moins 5 % en poids d'oxygène lié organiquement.

**2.** Procédé selon la revendication 1, **caractérisé en ce que** la biomasse est introduite en continu dans le réacteur.

**3.** Procédé selon l'une quelconque des revendications précédentes, **caractérisé en ce que** la température de réaction est comprise entre 250 et 550 °C.

**4.** Procédé selon l'une quelconque des revendications précédentes, **caractérisé en ce qu'**avant d'introduire la biomasse, le réacteur est préchauffé à la température de réaction.

**5.** Procédé selon l'une quelconque des revendications précédentes, **caractérisé en ce que** le fioul lourd est du goudron de bois.

**6.** Procédé selon l'une quelconque des revendications 1 à 4, **caractérisé en ce que** le fioul lourd est du goudron de bois contenant des proportions de l'huile de tall.

**7.** Procédé selon l'une quelconque des revendications précédentes 1 à 4, **caractérisé en ce que** le fioul lourd est du goudron de bois de conifères.

**8.** Procédé selon l'une quelconque des revendications précédentes 1 à 4, **caractérisé en ce que** le fioul lourd est du goudron de bois de conifères contenant des proportions de l'huile de tall.

**9.** Procédé selon l'une quelconque des revendications précédentes 1 à 4, **caractérisé en ce que** le fioul lourd est du goudron de bois de feuillus.

**10.** Procédé selon l'une quelconque des revendications précédentes 1 à 4, **caractérisé en ce que** le fioul lourd est du goudron de bois de feuillus contenant des proportions de l'huile de tall.

**FIG. 1**

FIG. 2

| Nr. | R.T. | Name | Summenformel | Struktur |
|---|---|---|---|---|
| 1 | 8.337 | Essigsäure | $C_2H_4O_2$ | |
| 2 | 39.531 | Phenol, 4-ethyl-2-methoxy- | $C_9H_{12}O_2$ | |
| 3 | 38.323 | Phenol, 4-ethyl- | $C_8H_{10}O$ | |
| 4 | 30.851 | Phenol, 2-methoxy- | $C_7H_8O_2$ | |
| 5 | 9.871 | (Acetol) 2-Propanone, 1-hydroxy- | $C_3H_6O_2$ | |
| 6 | 6.135 | 2-Butanone | $C_4H_8O$ | |
| 7 | 43.257 | Phenol, 2-methoxy-4-propyl- | $C_{10}H_{14}O_2$ | |
| 8 | 51.020 | Phenol, 4-ethyl-2,6-dimethoxy | $C_{10}H_{14}O_3$ | |
| 9 | 54.029 | n.i. | | |
| 10 | 28.289 | 2-Cyclopenten-1-one, 2-hydroxy-3-methyl- | $C_6H_8O_2$ | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006063310 A